# EUROPÄISCHE PATENTSCHRIFT

(11) **EP 0 991 532 B1**
(45) Veröffentlichungstag und Bekanntmachung des Hinweises auf die Patenterteilung: **27.02.2002**
(21) Anmeldenummer: 98939534.8
(22) Anmeldetag: 25.06.1998
(51) Int. Cl.: B60C 23/06, B60C 23/04

(54) **VERFAHREN ZUR MESSUNG DER UMDREHUNGSZAHL EINES KRAFTFAHRZEUGRADES UND LUFTDRUCKKONTROLLSYSTEM FÜR EIN KRAFTFAHRZEUG**
METHOD FOR DETERMINING THE ROTATIONAL SPEED OF A MOTOR VEHICLE WHEEL AND TYRE PRESSURE CONTROL SYSTEM FOR AN AUTOMOBILE
PROCEDE PERMETTANT DE DETERMINER UN NOMBRE DE TOURS D'UNE ROUE DE VEHICULE ET SYSTEME DE CONTROLE DE PRESSION D'UN PNEUMATIQUE DE VEHICULE AUTOMOBILE

(30) Priorität: 03.07.1997 DE 19728419
(43) Veröffentlichungstag der Anmeldung: 12.04.2000
(73) Patentinhaber: Continental Aktiengesellschaft, 30001 Hannover (DE)
(72) Erfinder: OLDENETTEL, Holger, D-30826 Garbsen (DE); ERNST, Gerhard, D-30629 Hannover (DE)
(86) Internationale Anmeldenummer: EP9803900
(87) Internationale Veröffentlichungsnummer: WO9901302

(56) Entgegenhaltungen:
- EP-A- 0 450 653
- EP-A- 0 517 082
- WO-A-93/03936
- DE-A- 19 618 658
- US-A- 4 510 484

## Beschreibung

Die Erfindung betrifft ein Verfahren zur Bestimmung der Umdrehungszahl eines sich um eine Drehachse drehenden Kraftfahrzeugrades. Die Erfindung betrifft ferner ein Luftdruckkontrollsystem, in dem die Umdrehung eines Kraftfahrzeugrades gemessen wird.

Ein Verfahren gemäß dem Oberbegriff des Anspruchs 1 ist aus der EP 0 517 082 A2 bekannt ; ein Luftdruckkontrollsystem entsprechenden Oberbegriff des Anspruchs 2 geht aus der EP 0 450 653 A2 hervor.

Aus dem Stand der Technik sind Luftdruckkontrollsysteme zur Kontrolle des Luftdrucks in Reifen eines Kraftfahrzeuges bekannt, die jedem Rad zugeordnet eine Luftdruckkontrollvorrichtung enthalten, die den Luftdruck der Kraftfahrzeugreifen automatisch messen und zumindest eine kritische Abweichung von einem Soll-Luftdruck dem Kraftfahrzeugführer melden. Dazu übermittelt jede Luftdruckkontrollvorrichtung in regelmäßigen Abständen ein gemessenes Drucksignal zusammen mit einer individuellen Kennung an eine Zentraleinheit des Kraftfahrzeuges. Die Übermittlung einer individuellen Kennung zusammen mit dem Drucksignal ist deswegen besonders wichtig, weil in dem Luftdruckkontrollsystem berührungsios Daten vom Rad des Kraftfahrzeuges zum Kraftfahrzeug übermittelt werden. Es muss daher beispielsweise ausgeschlossen werden, dass z. B. im Stau Luftdruckdaten eines benachbarten Fahrzeuges empfangen werden und es aufgrund dieser Daten zu Fehlmeldungen an den Kraftfahrzeugführer kommt. Dies wird durch die individuellen Kennungen ermöglicht, da die Räder eines anderen Kraftfahrzeuges naturgemäß andere individuelle Kennungen senden. In der Zentraleinheit sind Wertepaare der Form (Kennung der Luftdruckkontrollvorrichtung/Radposition) für jedes Rad des Kraftfahrzeuges gespeichert, so dass durch entsprechenden Vergleich in der Zentraleinheit darauf geschlossen werden kann, welche Kennung mit dem dazugehörigen Drucksignal von welcher Radposition des Kraftfahrzeuges gesendet wird. Eine Abweichung des übermittelten Drucksignals von einem vorgegebenen Wert an einer Radposition wird dem Kraftfahrzeugführer von der Zentraleinheit angezeigt, so dass dieser geeignete Maßnahmen einleiten kann.

Die Ausführungen zeigen, dass ein oben beschriebenes Luftdruckkontrollsystem nur dann einwandfrei funktionieren kann, wenn in der Zentraleinheit die Zuordnungen (Kennung der Luftdruckkontrollvorrichtung/Radposition) richtig gespeichert sind. Dementsprechend muss einerseits sichergestellt sein, dass sich diese Zuordnung während des Betriebes des Kraftfahrzeuges nicht ändert und andererseits muss eine neue Zuordnung nach jedem Reifenwechsel am Kraftfahrzeug vorgenommen werden. Aus der nachveröffentlichten DE 196 18 658 A1 ist ein Verfahren bekannt, mit dem eine neue Zuordnung nach einem Reifenwechsel am Kraftfahrzeug vorgenommen werden kann. Um das Verfahren gemäß der nachveröffentlichten DE 196 18 658 A1 durchführen zu können, ist es notwendig, die Umdrehungszahl jedes Kraftfahrzeugrades mit Hilfe eines Meßwertaufnehmers zu bestimmen, der sich am Kraftfahrzeugrad befindet und mit diesem rotiert (Näheres siehe DE 196 18 658 A1).

Der Erfindung liegt die Aufgabe zugrunde, ein Verfahren Beziehungsweise ein Luftdruckkontrollsystem zu schaffen, mit dem die Umdrehungszahl eines um eine Achse rotierenden Kraftfahrzeugrades mit Hilfe eines Messwertaufnehmers, der mit dem Kraftfahrzeugrad rotiert, auf einfache Art und Weise bestimmt werden kann.

Die Aufgabe ist durch die Merkmale der Ansprüche 1 beziehungsweise 2 gelöst.

Das Kraftfahrzeugrad, das um eine Drehachse drehbar gelagert ist, enthält einen Beschleunigungsmesser (bzw. Messwertaufnehmer), der in einem radialen Abstand zur Drehachse des Kraftfahrzeugrades angeordnet ist und entlang einer seiner Achsen, die im Folgenden "kraftempfindliche Achse" genannt wird, eine hohe Kraftempfindlichkeit aufweist, wobei der Beschleunigungsmesser derart ausgerichtet ist, dass die kraftempfindliche Achse weitgehend senkrecht zur Drehachse und weitgehend senkrecht zur Zentrifugalkraft, die an dem Beschleunigungsmesser bei einer Drehung des Kraftfahrzeugrades angreift, steht.

Mit einer derartigen Anordnung wird das Verfahren zur Messung der Umdrehungszahl des rotierenden Kraftfahrzeugrades gemäß Anspruch 1 wie folgt durchgeführt:
- das Kraftfahrzeugrad wird so ausgerichtet, dass die Drehachse des Kraftfahrzeugrades nahezu horizontal verläuft
- das Kraftfahrzeugrad wird in Drehung versetzt
- aus der Frequenz des periodisch verlaufenden Messsignals, das von dem Beschleunigungsmesser erzeugt wird, wird die Umdrehungszahl des Kraftfahrzeugrades bestimmt.

Unter weitgehend senkrechter Ausrichtung der kraftempfindlichen Achse des Beschleunigungsmessers zur Drehachse des Kraftfahrzeugrades und zur Zentrifugalkraft ist zu verstehen, dass die kraftempfindliche Achse des Beschleunigungsmessers, abgesehen von technisch nicht zu vermeidenden Ungenauigkeiten, genau senkrecht zur Drehachse des Kraftfahrzeugrades und zur Zentrifugalkraft ausgerichtet ist.

Das Kraftfahrzeugrad weist eine Felge und einen Reifen auf. Das Verfahren zur Messung der Umdrehungszahl des Kraftfahrzeugrades ist besonders einfach durchzuführen, da die Drehachse eines Kraftfahrzeugrades bei einem fahrenden Kraftfahrzeug automatisch immer nahezu horizontal ausgerichtet ist.

Der Grundgedanke der Erfindung ist darin zu sehen, dass mit Hilfe des Beschleunigungsmessers, der mit dem Kraftfahrzeugrad um die Drehachse rotiert, die Umdrehungszahl des Kraftfahrzeugrades direkt bestimmt wird. Somit erübrigt sich eine Messung der Zentrifugalkraft, die bei der Rotation des Kraftfahrzeugrades um die Drehachse auf den Beschleunigungsmesser einwirkt und eine Bestimmung der Umdrehungszahl aus der Zentrifugalkraft.

Die mit der Erfindung erzielten Vorteile sind insbesondere darin zu sehen, dass bei einer Messung der Umdrehungszahl eines Kraftfahrzeugrades, das um eine Achse drehbar gelagert ist, das Messsignal des Beschleunigungsmessers nicht mit Hilfe der Zentrifugalkraft, sondern mit Hilfe der Gravitationskraft erzeugt wird (genaueres s. Figurenbeschreibung). Der Beschleunigungsmesser braucht dementsprechend nur kleine Kräfte messen zu können und kann dementsprechend einen einfachen Aufbau aufweisen. Ein weiterer Vorteil der Erfindung ist darin zu sehen, dass das Verfahren zur Messung der Umdrehungszahl des Kraftfahrzeugrades auch noch dann durchzuführen ist, wenn der Körper mit einer hoher Rotationsgeschwindigkeit um die Drehachse rotiert und die auf den Beschleunigungsmesser einwirkenden Zentrifugalkräfte sehr groß werden, da nicht die Zentrifugalkräfte zur Bestimmung der Umdrehungszahl herangezogen werden.

Gemäß Anspruch 2 ist jeder Luftdruckkontrollvorrichtung eines Luftdruckkontrollsystems ein Beschleunigungsmesser zugeordnet, der in einem radialen Abstand r zur Drehachse des entsprechenden Rades angeordnet ist und entlang einer seiner Achsen eine hohe Kraftempfindlichkeit aufweist. Der Beschleunigungsmesser ist derart ausgerichtet, dass die kraftempfindliche Achse weitgehend senkrecht zur Drehachse und weitgehend senkrecht zur Zentrifugalkraft, die an dem Beschleunigungsmesser bei einer Drehung des entsprechenden Rades angreift, steht. Mit den derartig angeordneten Beschleunigungsmessern kann die Drehzahl der entsprechenden Räder bestimmt und somit das in der DE 196 18 658 A1 erläuterte Verfahren durchgeführt werden.

Gemäß einer Weiterbildung der Erfindung weist der Beschleunigungsmesser entlang der Achsen, die senkrecht zur kraftempfindlichen Achse stehen, eine wesentlich kleinere Kraftempfindlichkeit auf als entlang der kraftempfindlichen Achse. Der Vorteil dieser Weiterbildung ist darin zu sehen, dass der Beschleunigungsmesser durch Kräfte, die senkrecht zur kraftempfindlichen Achse stehen, wie beispielsweise die Zentrifugalkraft, die bei einer Rotation des Kraftfahrzeugrades auf den Beschleunigungsmesser einwirkt, nicht ohne weiteres verformbar ist.

Gemäß der Erfindung handelt es sich bei dem Beschleunigungsmesser um einen Biegebalken, der aus piezoelektrischem Material aufgebaut ist. Bei einer Verbiegung eines solchen Biegebalkens wird in diesem eine elektrische Spannung erzeugt, deren Größe in einem eindeutigen Zusammenhang zu dem Ausmaß der Verbiegung des Balkens steht. Derartige Biegebalken sind aus dem Stand der Technik hinreichend bekannt, so dass sie hier nicht näher erläutert werden sollen.

Der Vorteil ist darin zu sehen, dass es sich bei Biegebalken um einfach aufgebaute und somit preiswerte Beschleunigungsmesser handelt. Ein weiterer Vorteil von Biegebalken ist darin zu sehen, dass sie keine mechanischen Anschläge enthalten. Aus diesem Grunde erzeugt ein Biegebalken bei einer Rotation des Kraftfahrzeugrades auch dann noch ein hinreichend genaues Messsignal, wenn die kraftempfindliche Achse des Biegebalkens nicht genau senkrecht zur Zentrifugalkraft steht und somit noch ein Anteil der Zentrifugalkraft in Richtung der kraftempfindlichen Achse des Biegebalkens wirkt, da sich die durch diesen Anteil der Zentrifugalkraft herbeigeführte Verbiegung des Biegebalkens lediglich dem Messsignal überlagert. Auch in diesem Fall sind also keine mechanischen Anschläge im Weg.

Gemäß einer Weiterbildung der Erfindung nach Anspruch 3 ist das Verhältnis der Länge des Biegebalkens zur Höhe des Biegebalkens größer als 2. Durch eine derartige Dimensionierung des Biegebalkens ist gewährleistet, dass bei einer Verbiegung des Biegebalkens eine ausreichend große elektrische Spannung auf den Biegebalken erzeugt wird. Es hat sich gezeigt, dass ein Verhältnis der Länge des Biegebalkens zur Höhe des Biegebalkens von ca. 20 besonders vorteilhaft ist.

Gemäß einer Weiterbildung der Erfindung nach Anspruch 4 weist der Biegebalken eine Länge von mindestens 3 mm auf. Es hat sich herausgestellt, dass eine Mindestlänge von 3 mm des Biegebalkens notwendig ist, um in den Biegebalken bei einer Verbiegung ausreichend elektrische Energie erzeugen und ein Messsignal mit ausreichender Stärke generieren zu können. Vorzugsweise wird ein Biegebalken verwendet, der eine Länge von 12 mm aufweist.

Gemäß einer Weiterbildung der Erfindung nach Anspruch 5 ist der Beschleunigungsmesser im Tiefbett der Felge des Kraftfahrzeugrades angeordnet.

Ein Ausführungsbeispiel und weitere Vorteile der Erfindung werden im Zusammenhang mit den nachstehenden Figuren erläutert, darin zeigt:
- Fig. 1: ein um eine Achse drehbar gelagertes Kraftfahrzeugrad mit einem Beschleunigungsmesser,
- Fig. 2: ein um eine Achse drehbar gelagertes Kraftfahrzeugrad mit einem Beschleunigungsmesser,
- Fig. 3: ein Diagramm,
- Fig. 4: ein um eine Achse drehbar gelagertes Kraftfahrzeugrad,
- Fig. 5: ein Diagramm.

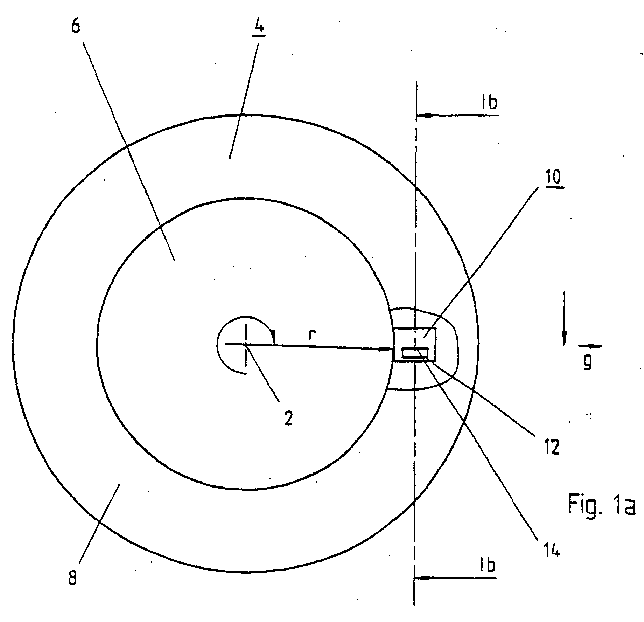

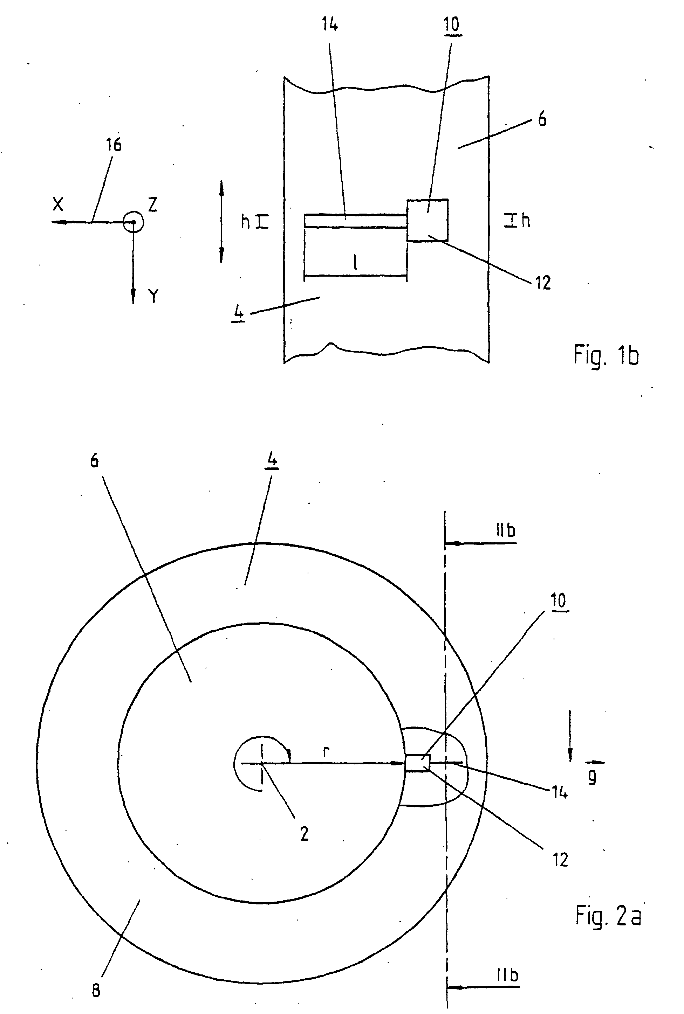

Figur 1 zeigt ein um eine Achse 2 drehbar gelagertes Kraftfahrzeugrad 4 bestehend aus einer Felge 6 und einem auf die Felge 6 aufgezogenen Reifen 8. In einem radialen Abstand r zu der Drehachse 2 ist auf dem Kraftfahrzeugrad 4 ein Beschleunigungsmesser 10 angeordnet, vorzugsweise im Tiefbett der Felge 6. Der Beschleunigungsmesser 10 besteht in dem gezeigten Ausführungsbeispiel aus einem Sockel 12, auf dem ein Biegebalken 14 aus piezoelektrischem Material angeordnet ist, dessen Längsausdehnung I mindestens zweimal so groß ist wie dessen Höhe h. Die Drehachse 2, um die das Kraftfahrzeugrad 4 drehbar gelagert ist, ist weitgehend horizontal ausgerichtet, so dass die Gravitationskraft (in der Fig. 1a angedeutet durch den Vektor g) weitgehend senkrecht auf der Drehachse 2 steht.

Figur 1b zeigt eine Schnittdarstellung aus der Figur 1a entlang der in der Figur 1a strichpunktiert eingezeichneten Linie. In der Figur 1b ist ein orthogonales Dreibein eingezeichnet, von dem im Folgenden angenommen wird, dass es sich bei einer Drehung des Kraftfahrzeugrades 4 um die (in der Figur 1b nicht eingezeichnete) Drehachse 2 in Richtung des Pfeiles, der neben dem orthogonalen Dreibein eingezeichnet ist, mitdreht. Der Figur 1b ist zu entnehmen, dass der Beschleunigungsmesser 10 im Tiefbett der Felge 6 angeordnet ist und dass die Längsausdehnung I des Biegebalkens 14 in Richtung der x-Achse des orthogonalen Dreibeins verläuft. in Richtung der x-Achse des orthogonalen Dreibeins verläuft ebenfalls die (in der Figur 1b nicht eingezeichnete) Drehachse 2. Dementsprechend weist die Zentrifugalkraft, die bei einer Rotation des Kraftfahrzeugrades 4 um die Achse 2 auf dem Beschleunigungsmesser 10 einwirkt, immer in Richtung der z-Achse des orthogonalen Dreibeins 16. Der Beschleunigungsmesser 10 ist nun derartig auf dem Kraftfahrzeugrad 4 und insbesondere in dem Tiefbett der Felge 6 angeordnet, dass die kraftempfindliche Achse des Biegebalkens 14 entlang der y-Richtung des orthogonalen Dreibeins 16 verläuft und somit senkrecht zur Drehachse 2 und zur Zentrifugalkraft ausgerichtet ist. Bei dem in der Figur 1b gezeigten Ausführungsbeispiel wird dies dadurch erreicht, dass die Längsausdehnung I des Biegebalkens 14 in Richtung der x-Achse des orthogonalen Dreibeins 16 verläuft. Die in der Figur 1 gezeigte Anordnung des Biegebalkens 14 im Tiefbett der Felge 6 ist besonders vorteilhaft, da der Biegebalken 14 nicht weit in den Reifen 8 des Kraftfahrzeugrades 4 hineinragt.

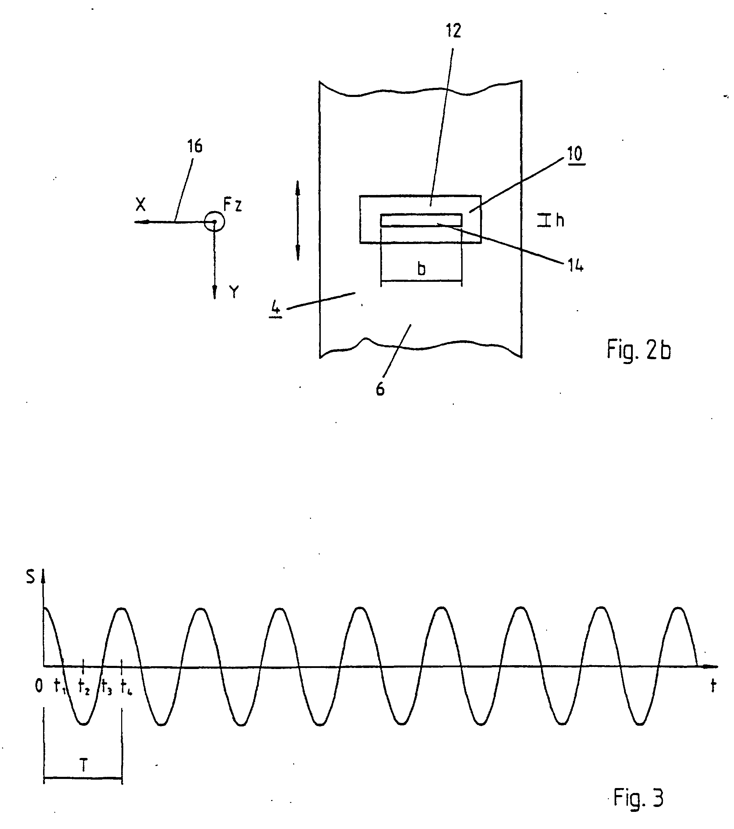

Figur 2 zeigt weitgehend das gleiche wie Figur 1. Der einzige Unterschied ist darin zu sehen, dass der Beschleunigungsmesser 10 auf dem Kraftfahrzeugrad 4 und insbesondere im Tiefbett der Felge 6 derartig angeordnet ist, dass die Längsrichtung des Biegebalkens 14 entlang der z-Achse des orthogonalen Dreibeins 16 verläuft (s. Fig. 2a und Fig. 2b). Auch in diesem Fall verläuft die kraftempfindliche Achse des Biegebalkens 14 in Richtung der y-Achse des orthogonalen Dreibeins 16 und steht somit weitgehend senkrecht auf der Drehachse 2 und auf der Zentrifugalkraft, die bei einer Rotation des Kraftfahrzeugrades 4 um die Drehachse 2 auf den Beschleunigungsmesser 10 einwirkt. Eine derartige Ausrichtung der kraftempfindlichen Achse des Biegebalkens 14 ist immer gegeben - allgemein formuliert -, wenn die Längsausdehnung I des Biegebalkens 14 in der Ebene liegt, die durch die Drehachse 2 und durch die auf den Beschleunigungsmesser 10 einwirkende Zentrifugalkraft aufgespannt wird. Der Beschleunigungsmesser 10 kann also eine beliebige Zwischenstellung zwischen der in der Figur 1 und Figur 2 gezeigten Stellung einnehmen.

Im Zusammenhang mit der Figur 1a und mit der Figur 3 wird nunmehr erläutert, wie mit Hilfe des auf dem Kraftfahrzeugrad 4 angeordneten Beschleunigungsmessers 10 die Umdrehungszahl des um die Drehachse 2 rotierenden Kraftfahrzeugrades 4 bestimmt wird. In der in der Figur 1a gezeigten Position des Beschleunigungsmessers 10 verläuft die Gravitationskraft g in Richtung der kraftempfindlichen Achse des Biegebalkens 14, so dass dieser durch die Gravitationskraft g eine maximale Verbiegung erfährt und somit zum Zeitpunkt t = 0 ein maximales Signal erzeugt (s. Fig. 3). Wenn sich das Kraftfahrzeugrad 4 aus der in der Fig. 1 a gezeigten Position um 90° um die Drehachse 2 dreht, stehen die kraftempfindliche Achse des Biegebalkens 14 und die Gravitationskraft g senkrecht zueinander, so dass der Biegebalken 14 durch die Gravitationskraft g keinerlei Verformung erfährt und das zum Zeitpunkt t = t₁ von dem Biegebalken 14 erzeugte Signal somit verschwindet. Nach einer weiteren Drehung des Kraftfahrzeugrades 4 um weitere 90° verläuft die kraftempfindliche Achse des Biegebalkens 14 wiederum in Richtung der Gravitationskraft g, so dass dieser durch die Gravitationskraft g wiederum maximal verformt wird, wobei die Verformung jedoch nunmehr zu der Verformung, die sich in der Position, die in Figur 1a gezeigt ist, ergibt, entgegengesetzt ist. Dementsprechend erzeugt der Biegebalken zum Zeitpunkt t = t₂ ein Signal, das den gleichen Betrag aufweist, wie zum Zeitpunkt t = t₀, jedoch ein negatives Vorzeichen hat. Nach einer Drehung um weitere 90° steht die kraftempfindliche Achse des Biegebalkens 14 wiederum senkrecht auf der Gravitationskraft g, so dass vom Biegebalken 14 zum Zeitpunkt t = t₃ kein Signal erzeugt wird. Nach einer Drehung des Kraftfahrzeugrades 4 um die Drehachse 2 um weitere 90° wird wiederum die in der Fig. 1a gezeigte Position des Beschleunigungsmessers 10 erreicht, so dass die kraftempfindliche Achse des Biegebalkens 14 wieder in Richtung der Gravitationskraft g verläuft, so dass der Biegebalken 14 wieder durch die Gravitationskraft g maximal verformt wird und zum Zeitpunkt t = t₄ wieder ein maximales Signal erzeugt wird. Bei einer Rotation des Kraftfahrzeugrades 4 um die horizontal verlaufende Drehachse 2 wird durch den Beschleunigungsmesser 10 also ein periodisch verlaufendes Messsignal erzeugt, wobei die Frequenz des Signals der Umdrehungszahl des Kraftfahrzeugrades (Umdrehungen pro Zeiteinheit) entspricht.

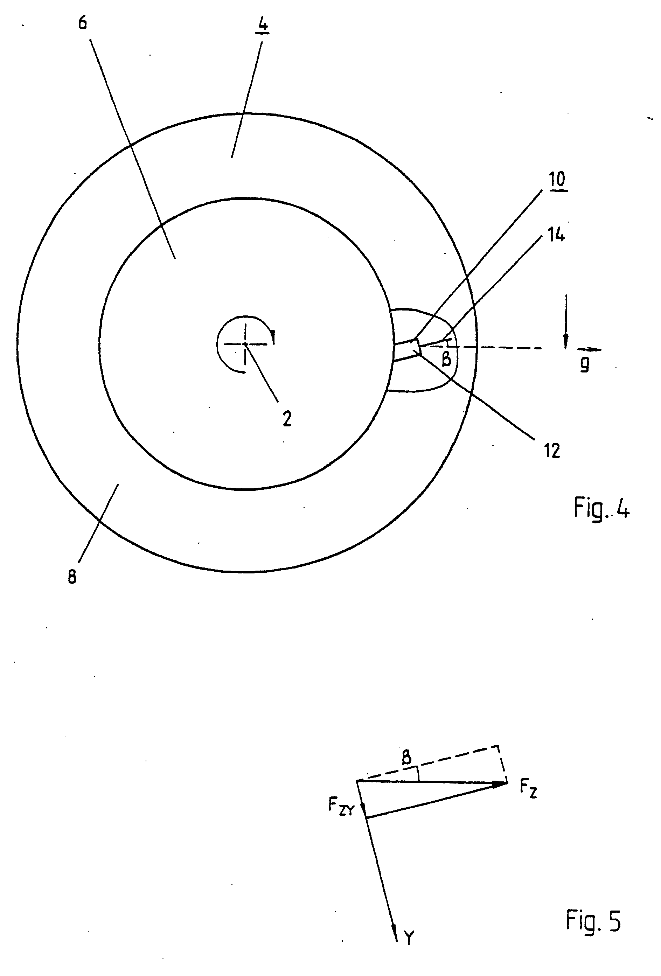

Im Zusammenhang mit den Figuren 4 und 5 wird nun erläutert, wie der Messbereich des Beschleunigungsmessers 10 festzulegen ist.. Wie bereits eingangs erläutert, ist es aus fertigungstechnischen Gründen nicht möglich, den Beschleunigungsmesser 10 in dem Kraftfahrzeugrad derartig anzuordnen, dass die kraftempfindliche Achse des Beschleunigungsmessers 10 exakt senkrecht auf der Zentrifugalkraft steht, die auf den Beschleunigungsmesser 10 bei einer Rotation des Kraftfahrzeugrades 4 um die Drehachse 2 einwirkt. Vielmehr wird es eine kleine Abweichung um den Winkel β geben, der etwa bei 1° liegt. Die Zentrifugalkraft F_{z} weist also in Richtung der kraftempfindlichen Achse des Beschleunigungsmessers 10 eine Komponente F_{ZY} = F_{Z} sin β (vergleiche Fig. 5) auf. Diese Komponente der Zentrifugalkraft wirkt ständig entlang der kraftempfindlichen Achse des Beschleunigungsmessers 10, so dass der Biegebalken 14 durch diese Komponente der Zentrifugalkraft ständig verformt wird. Der Messbereich des Beschleunigungsmessers 10 bzw. des Biegebalkens 14 ist also so zu bemessen, dass er trotz der Verformung durch die Zentrifugalkraftkomponente in Richtung der kraftempfindlichen Achse noch die Gravitationskraft mit ausreichender Genauigkeit zu messen vermag. Ergibt die Berechnung also beispielsweise, dass bei maximaler Rotationsgeschwindigkeit des Kraftfahrzeugrades 4 um die Drehachse 2, bei der die Umdrehungszahl noch gemessen werden soll, die entlang der kraftempfindlichen Achse des Beschleunigungsmessers 10 wirkende Zentrifugalkraftkomponente 10g entspricht, so ist der Messbereich des Beschleunigungsmessers so auszulegen, dass er mindestens 11 g zu messen vermag.

### Bezugszeichenliste

- 2: Drehachse
- 4: Kraftfahrzeugrad
- 6: Felge
- 8: Reifen
- 10: Beschleunigungsmesser
- 12: Sockel
- 14: Biegebalken
- 16: orthogonales Dreibein

## Patentansprüche

1. Verfahren zur Messung der Umdrehungszahl eines Kraftfahrzeugrades (4), das um eine Drehachse (2) drehbar gelagert ist und das einen, Beschleunigungsmesser (10) enthält, der in einem radialen Abstand (r) zur Drehachse (2) des Kraftfahrzeugrades (4) angeordnet ist und entlang einer seiner Achsen eine hohe Kraftempfindlichkeit aufweist, wobei der Beschleunigungsmesser (10) derart ausgerichtet ist, daß die kraftempfindliche Achse weitgehend senkrecht zur Drehachse (2) und weitgehend senkrecht zur Zentrifugalkraft, die an dem Beschleunigungsmesser (10) bei einer Drehung des Kraftfahrzeugrades (4) um die Drehachse (2) angreift, steht, in folgenden Verfahrensschritten:
- das Kraftfahrzeugrad (4) wird so ausgerichtet, daß die Drehachse (2) des Kraftfahrzeugrades (4) nahezu horizontal verläuft
- das Kraftfahrzeugrad (4) wird in Drehung versetzt
- aus der Frequenz des periodisch verlaufenden Meßsignals, das von dem Beschleunigungsmesser (10) unter dem Einfluß der Gravitationskraft auf diesen erzeugt wird, wird die Umdrehungszahl des Kraftfahrzeugrades (4) bestimmt,
**dadurch gekennzeichnet, daß**
ein aus einem Sockel (12) mit darauf angeordneten Biegebalken (14) aus piezoelektrischem Material bestehender Beschleunigungsmesser (10) eingesetzt wird, der an dem Kraftfahrzeugrad (4) so angeordnet wird, daß die Längsausdehnung (I) des Biegebalkens (14) in der Ebene liegt, die durch die Drehachse (2) und durch die auf den Biegebalken (14) einwirkende Zentrifugalkraft aufgespannt wird, so daß der Biegebalken (14) bei einer Drehung des Rades infolge der durch die Gravitationskraft hervorgerufenen Verformungen das periodische Meßsignal erzeugt.

2. Luftdruckkontrollsystem für ein Kraftfahrzeug mit Rädern (4), das Luftdruckkontrollvorrichtungen enthält, von denen jeweils eine einem Rad (4) des Kraftfahrzeuges zugeordnet ist, wobei jeder Luftdruckkontrollvorrichtung zur Messung der Umdrehungszahl des Rades (4) ein Beschleunigungsmesser (10) zugeordnet ist, der in einem radialen Abstand (r) zur Drehachse (2) des Kraftfahrzeugrades (4) angeordnet ist und entlang einer seiner Achsen eine hohe Kraftempfindlichkeit aufweist, wobei der Beschleunigungsmesser (10) derart ausgerichtet ist, daß die kraftempfindliche Achse weitgehend senkrecht zur Drehachse (2) und weitgehend senkrecht zur Zentrifugalkraft, die an dem Beschleunigungsmesser (10) bei einer Drehung des Kraftfahrzeugrades (4) um die Drehachse (2) angreift, steht, so daß der Beschleunigungsmesser (10) bei einer Drehung des Rades (4) um die nahezu horizontal verlaufende Drehachse (2) unter dem Einfluß der Gravitationskraft ein periodisch verlaufendes Meßsignal erzeugt, wobei die Bestimmung der Umdrehungszahl des Rades (4) aus der Frequenz des Meßsignals erfolgt **dadurch gekennzeichnet, daß** der Beschleunigungsmesser (10) aus einem Sockel (14), auf dem ein Biegebalken (14) aus piezoelektrischem Material angeordnet ist, besteht, wobei der Beschleunigungsmesser (10) an dem Kraftfahrzeugrad (4) so angeordnet ist, daß die Längsausdehnung (I) des Biegebalkens (14) in der Ebene liegt, die durch die Drehachse (2) und durch die auf den Biegebalken (14) einwirkende Zentrifugalkraft aufgespannt wird.

3. Luftdruckkontrollsystem nach Anspruch 2, **dadurch gekennzeichnet, daß** bei dem Biegebalken (14) das Verhältnis Länge (I)/Höhe (h) größer als 2 ist.

4. Luftdruckkontrollsystem nach einem der Ansprüche 2 und 3, **dadurch gekennzeichnet, daß** der Biegebalken (14) eine Länge (I) von mindestens 3 mm aufweist.

5. Luftdruckkontrollsystem nach einem der Ansprüche 2 bis 4, **dadurch gekennzeichnet, daß** der Beschleunigungsmesser (10) im Tiefbett der Felge (6) des Kraftfahrzeugrades (4) angeordnet ist.

## Claims

1. Method of measuring the number of revolutions of an automotive vehicle wheel (4), which is mounted so as to be rotatable about an axis of rotation (2) and includes an accelerometer (10), which is disposed at a radial spacing (r) from the axis of rotation (2) of the automotive vehicle wheel (4) and has a high level of sensitivity to force along one of its axes, the accelerometer (10) being aligned in such a manner that the power-sensitive axis lies largely perpendicular to the axis of rotation (2) and largely perpendicular to the centrifugal force which affects the accelerometer (10) during one rotation of the automotive vehicle wheel (4) about the axis of rotation (2), in the following method steps:
- the automotive vehicle wheel (4) is aligned so that the axis of rotation (2) of the automotive vehicle wheel (4) extends almost horizontally;
- the automotive vehicle wheel (4) is set in rotation; and
- the number of revolutions of the automotive vehicle wheel (4) is determined from the frequency of the periodically occurring measuring signal, which is generated by the accelerometer (10) by the influence of the force of gravity upon said accelerometer;
**characterised in that** an accelerometer (10) is used, which comprises a base (12) with a bendable bar (14) disposed thereon and formed from piezoelectric material, which accelerometer is so disposed on the automotive vehicle wheel (4) that the longitudinal dimension (1) of the bendable bar (14) lies in the plane which is braced by the axis of rotation (2) and by the centrifugal force acting on the bendable bar (14), so that the bendable bar (14) generates the periodic measuring signal during a rotation of the wheel as a consequence of the deformations caused by the force of gravity.

2. Pneumatic pressure monitoring system for an automotive vehicle with wheels (4), which system includes pneumatic pressure monitoring devices, each respective one of which is associated with one wheel (4) of the automotive vehicle, each pneumatic pressure monitoring device having associated therewith, for measuring the number of revolutions of the wheel (4), an accelerometer (10) which is disposed at a radial spacing (r) from the axis of rotation (2) of the automotive vehicle wheel (4) and has a high level of sensitivity to force along one of its axes, the accelerometer (10) being aligned in such a manner that the force-sensitive axis lies largely perpendicular to the axis of rotation (2) and largely perpendicular to the centrifugal force which affects the accelerometer (10) during one rotation of the automotive vehicle wheel (4) about the axis of rotation (2), so that, during one rotation of the wheel (4) about the almost horizontally extending axis of rotation (2), the accelerometer (10) generates a periodically occurring measuring signal by the influence of the force of gravity, the number of revolutions of the wheel (4) being determined from the frequency of the measuring signal, **characterised in that** the accelerometer (10) comprises a base (12), on which a bendable bar (14), formed from piezoelectric material, is disposed, the accelerometer (10) being so disposed on the automotive vehicle wheel (4) that the longitudinal dimension (1) of the bendable bar (14) lies in the plane which is braced by the axis of rotation (2) and by the centrifugal force acting on the bendable bar (14).

3. Pneumatic pressure monitoring system according to claim 2, **characterised in that**, in the case of the bendable bar (14), the ratio of length (l): height (h) is greater than 2.

4. Pneumatic pressure monitoring system according to one of claims 2 and 3, **characterised in that** the bendable bar (14) has a length (l) of at least 3 mm.

5. Pneumatic pressure monitoring system according to one of claims 2 to 4, **characterised in that** the accelerometer (10) is disposed in the drop base of the rim (6) of the automotive vehicle wheel (4).

## Revendications

1. Procédé pour mesurer la vitesse de rotation d'une roue (4) d'un véhicule automobile, qui est montée de manière à pouvoir tourner autour d'un axe de rotation (2), et qui contient un accéléromètre (10), qui est monté à une distance radiale (r) de l'axe de rotation (2) de la roue (4) du véhicule automobile et possède, le long de l'un de ses axes, une sensibilité aux forces élevée, l'accéléromètre (10) étant orienté de telle sorte que l'axé sensible aux forces soit dans une large mesure perpendiculaire à l'axe de rotation (2) et dans une large mesure perpendiculaire à la force centrifuge, qui est appliquée à l'accéléromètre (10) lors d'une rotation de la roue (4) du véhicule automobile autour de l'axe de rotation (2), comportant les étapes suivantes de procédé :
• on oriente la roue (4) du véhicule automobile de manière que l'axe de rotation (2) de la roue (4) du véhicule automobile soit approximativement horizontal,
• on fait tourner la roue (4) du véhicule automobile,
• à partir de la fréquence du signal de mesure périodique, qui est produit par l'accéléromètre (10) sous l'influence de l'action de la force gravitationnelle sur cet accéléromètre, on détermine la vitesse de rotation de la roue (4) du véhicule automobile,
**caractérisé en ce qu'**on utilise un accéléromètre (10) constitué par un socle (12), sur lequel est montée une poutre travaillant en flexion (14), et réalisé en un matériau piézoélectrique et qui est monté sur la roue (4) du véhicule automobile de telle sorte que l'étendue en longueur (I) de la poutre travaillant en flexion (14) se situe dans un plan, qui est défini par l'axe de rotation (2) et par la force centrifuge qui agit sur la poutre travaillant en flexion (14), de sorte que la poutre travaillant en flexion (14) produit le signal de mesure périodique lors d'une rotation de la roue, sous l'effet des déformations provoquées par la force gravitationnelle.

2. Système de contrôle de pression d'air pour un véhicule automobile comportant des roues (4), qui contient des dispositifs de contrôle de la pression de l'air, dont chacun respectivement est associé à une roue (4) du véhicule automobile, et dans lequel à chaque dispositif de contrôle de la pression de l'air est associé, pour la mesure de la vitesse de rotation de la roue (4), un accéléromètre (10), qui est disposé à une distance radiale (r) de l'axe de rotation (2) de la roue (4) du véhicule automobile et possède, le long de l'un de ses axes, une sensibilité aux forces élevée, l'accéléromètre (10) étant orienté de telle sorte que l'axe sensible aux forces sont dans une large mesure perpendiculaire à l'axe de rotation (2) et dans une large mesure perpendiculaire à la force centrifuge, qui est appliquée à l'accéléromètre (10) lors d'une rotation de la roue (4) du véhicule automobile autour de l'axe de rotation (2), de sorte que lors d'une rotation de la roue (4) autour de l'axe de rotation (2) approximativement horizontal, sous l'action de la force gravitationnelle, l'accéléromètre (10) produit un signal de mesure périodique, la détermination de la vitesse de rotation de la roue (4) s'effectuant à partir de la fréquence du signal de mesure, **caractérisé en ce que** l'accéléromètre (10) est constitué par un socle (12), sur lequel est disposée une poutre travaillant en flexion (14) et formée d'un matériau piézo-électrique, l'accéléromètre (10) étant disposé sur la roue (4) du véhicule automobile de telle sorte que l'étendue longitudinale (I) de la poutre travaillant en flexion (14) soit située dans le plan qui est défini par l'axe de rotation (2) et par la force centrifuge qui agit sur la poutre travaillant en flexion (14).

3. Système de contrôle de pression d'air selon la revendication 2, **caractérisé en ce que** dans le cas de la poutre travaillant en flexion (14), le rapport longueur (l) / hauteur (h) est supérieur à 2.

4. Système de contrôle de pression d'air selon l'une des revendications 2 et 3, **caractérisé en ce que** la poutre travaillant en flexion (14) possède une longueur (l) égale à au moins 3 mm.

5. Système de contrôle de pression d'air selon l'une des revendications 2 à 4, **caractérisé en ce que** l'accéléromètre (10) est disposé dans le creux de la jante (6) de la roue (4) du véhicule automobile.
